# EUROPEAN PATENT APPLICATION

(11) **EP 4 644 030 A1**
(43) Date of publication of application: **05.11.2025**
(21) Application number: 23909209.1
(22) Date of filing: 21.08.2023
(51) Int. Cl.: B23K 20/12

(54) **ULTRASONIC DUAL-CHANNEL WELDING SYSTEM**

(30) Priority: 29.12.2022 CN 202211709084
(71) Applicant: SBT Ultrasonic Technology Co., Ltd, Shanghai 200240 (CN)
(72) Inventor: SHI, Xinhua, Shanghai 200240 (CN); QI, Chunguang, Shanghai 200240 (CN); HUANG, Weixin, Shanghai 200240 (CN)
(74) Representative: Lavoix
(86) International application number: PCT/CN2023/114058
(87) International publication number: WO 2024/139269

(57) **Abstract**

An ultrasonic dual-channel welding system (100), comprising: a first generator (110), a first acoustic assembly (120), a second generator (130), a second acoustic assembly (140), and a phase tracking control unit (150). The first generator is used for generating a first ultrasonic signal (S1); the first acoustic assembly is used for providing, according to the first ultrasonic signal, first welding energy (E1) for a part (101) to be welded; the second generator is used for generating a second ultrasonic signal (S2); the second acoustic assembly is used for providing second welding energy (E2) for said part according to the second ultrasonic signal; the phase tracking control unit is used for generating a phase control signal (C) in real time according to the first ultrasonic signal and the second ultrasonic signal, sending the phase control signal to the first generator and/or the second generator, and adjusting the first ultrasonic signal and/or the second ultrasonic signal, such that the first welding energy and the second welding energy are in an energy superposition state. The welding system can quickly change the phases of ultrasonic signals of master and slave generators, and can quickly match multiple acoustic tool assemblies without changing the configuration of the master and slave generators.

## Description

### Technical Field

The present disclosure mainly relates to the field of ultrasonic welding, specifically to an ultrasonic dual-channel welding system.

### Background

In the field of ultrasonic welding, a single set of ultrasonic welding generator is typically used to perform welding operations. However, depending on the welding materials, in some cases, the power of a single set of ultrasonic welding generator is insufficient to meet the requirements of high-power ultrasonic welding. In such cases, it is necessary to use two relatively independent ultrasonic welding generator units simultaneously to form one set of ultrasonic dual-channel generator, so that the energy can be superimposed to provide greater welding power.

However, since the two ultrasonic welding generator units used are relatively independent, when generating high-frequency ultrasonic signals, it is difficult to control the phase synchronization or asynchronization of the ultrasonic signals emitted by the two generator units, and it is also impossible to actively control the ultrasonic signals to automatically lock in the in-phase or anti-phase state during operation, often resulting in inconsistency with the customer's application settings requirements. When the phases of the ultrasonic signals emitted by the two ultrasonic welding generator units are inconsistent with the actual application setting requirements, the two paths of actual output ultrasonic welding energy may cancel each other out, failing to achieve the effect of energy superposition required by the ultrasonic dual-channel welding system and resulting in defective welded products. When the actual application settings change, such as switching from in-phase to out-of-phase or from out-of-phase to in-phase, the phase settings of each ultrasonic welding generator cannot be adaptively adjusted, making them unable to adapt to the changed application settings.

### Summary

The technical problem to be solved by the present disclosure is to provide an ultrasonic dual-channel welding system that automatically tracks and locks the phase.

The technical solution adopted by the present disclosure to solve the above technical problems is an ultrasonic dual-channel welding system, comprising: a first generator, a first acoustic assembly, a second generator, a second acoustic assembly, and a phase tracking control unit, the first generator is configured to generate a first ultrasonic signal, the first acoustic assembly is configured to provide a first welding energy to a part to be welded according to the first ultrasonic signal, the second generator is configured to generate a second ultrasonic signal, the second acoustic assembly is configured to provide a second welding energy to the part to be welded according to the second ultrasonic signal, the phase tracking control unit is configured to generate a phase control signal in real time according to the first ultrasonic signal and the second ultrasonic signal, send the phase control signal to the first generator and/or the second generator, and adjust the first ultrasonic signal and/or the second ultrasonic signal, such that the first welding energy and the second welding energy are in an energy superposition state.

In one embodiment of the present disclosure, the first acoustic assembly has a first target phase, the second acoustic assembly has a second target phase, a target phase difference exists between the first target phase and the second target phase, and the phase control signal is configured to make a phase difference between a phase of the first ultrasonic signal and a phase of the second ultrasonic signal equal to the target phase difference.

In one embodiment of the present disclosure, the phase control signal comprising a first phase control signal, the phase tracking control unit comprising a phase monitoring control unit, a phase tracking lock unit, and a system phase setting unit, wherein, the phase monitoring control unit is configured to monitor the first ultrasonic signal and the second ultrasonic signal in real time, and calculate the phase difference between the first ultrasonic signal and the second ultrasonic signal in real time; the system phase setting unit is configured to set the target phase difference; the phase tracking lock unit is configured to compare the phase difference with the target phase difference, generate the first phase control signal, send the first phase control signal to the phase monitoring control unit, and the phase monitoring control unit is further configured to send the first phase control signal to the first generator and/or the second generator.

In one embodiment of the present disclosure, the target phase difference comprising a synchronous phase difference and an asynchronous phase difference.

In one embodiment of the present disclosure, the first phase control signal comprising a high level and a low level.

In one embodiment of the present disclosure, the first acoustic assembly has a first target phase, the second acoustic assembly has a second target phase, and the phase control signal is configured to make a phase of the first ultrasonic signal consistent with the first target phase, and/or, make a phase of the second ultrasonic signal consistent with the second target phase.

In one embodiment of the present disclosure, the phase control signal comprising a second phase control signal, the phase tracking control unit comprising a phase monitoring control unit, a phase tracking lock unit, and a system phase setting unit, wherein, the phase monitoring control unit is configured to monitor the first ultrasonic signal and the second ultrasonic signal in real time; the system phase setting unit is configured to set the first target phase and the second target phase; the phase tracking lock unit is configured to compare the phase of the first ultrasonic signal with the first target phase, compare the phase of the second ultrasonic signal with the second target phase, generate the second phase control signal, and send the second phase control signal to the phase monitoring control unit, the phase monitoring control unit is further configured to send the second phase control signal to the first generator and/or the second generator.

In one embodiment of the present disclosure, the second phase control signal comprising a first phase difference between the phase of the first ultrasonic signal and the first target phase, and/or, a second phase difference between the phase of the second ultrasonic signal and the second target phase.

In one embodiment of the present disclosure, the phase control signal is configured to control a phase range from 0° to ±180°.

In one embodiment of the present disclosure, the first acoustic assembly comprising a first transducer, a first amplitude modulator, and a first welding head.

In one embodiment of the present disclosure, the second acoustic assembly comprising a second transducer, a second amplitude modulator, and a second welding head.

In one embodiment of the present disclosure, the first generator is a master generator, and the second generator is a slave generator.

The ultrasonic dual-channel welding system of the present disclosure is configured with the phase tracking control unit, which generates phase control signals in real time according to ultrasonic signals. It can set the target phase difference or target phase to be achieved according to the setting requirements of an acoustic tool assembly, meeting the requirements of various actual production processes and thereby rapidly changing the phases of the ultrasonic signals from the master generator and the slave generator. It can quickly match the settings of multiple acoustic tool assemblies without replacing the configurations of the master generator and the slave generator, further reducing the customer's usage costs and maintenance costs.

### Brief Description of the Drawings

The features and performance of the present disclosure are further described by the following embodiments and their accompanying drawings.
FIG. 1 is a system diagram of an ultrasonic dual-channel welding system according to an embodiment of the present disclosure;
FIG. 2 is an exemplary waveform diagram of a first ultrasonic signal S1 and a second ultrasonic signal S2 in-phase;
FIGs. 3A to 3C show exemplary waveform diagrams of the first ultrasonic signal S1 and the second ultrasonic signal S2 with three out-of-phases;
FIG. 4 is a system diagram of an ultrasonic dual-channel welding system according to another embodiment of the present disclosure;
FIG. 5 is a system diagram of an ultrasonic dual-channel welding system according to another embodiment of the present disclosure.

### Preferred Embodiment of the Present Disclosure

In order to make the above objectives, features, and advantages of the present disclosure more obvious and understandable, the specific embodiments of the present disclosure will be described in detail below in conjunction with the accompanying drawings.

The following description elaborates on many specific details to facilitate a full understanding of the present disclosure, but the present disclosure can also be implemented in other ways different from those described herein, and therefore the present disclosure is not limited by the specific embodiments disclosed below.

As shown in the present disclosure and claims, unless the context clearly indicates an exception, words such as "one", "a", "an", and/or "the" do not specifically refer to the singular, but may also include the plural. In general, the terms "include" and "comprise" merely indicate the inclusion of explicitly identified steps and elements, such steps and elements do not constitute an exclusive list, and the method or apparatus may also include other steps or elements.

Unless otherwise specified, the relative arrangement, numerical expressions, and values of the components and steps described in these embodiments do not limit the scope of the present disclosure. At the same time, it should be understood that for ease of description, the dimensions of the various parts shown in the attached figure are not drawn according to the actual proportional relationship. For technologies, methods, and equipment known to ordinary technical personnel in related fields, detailed discussions may not be made, but in appropriate circumstances, such technologies, methods, and equipment should be considered as part of the authorization manual. In all the examples shown and discussed here, any specific value should be interpreted as merely illustrative and not restrictive. Therefore, other examples of exemplary embodiments may have different values. It should be noted that similar labels and letters represent similar items in the following figures. Therefore, once an item is defined in one figure, it does not need to be further discussed in subsequent figures.

In addition, it should be noted that the use of words such as "first" and "second" to define components is only for the purpose of distinguishing the corresponding components. If not otherwise stated, the above words do not have a special meaning and therefore cannot be understood as limiting the scope of protection of the present disclosure. In addition, although the terms used in the present disclosure are selected from commonly known terms, some of the terms mentioned in the specification of the present disclosure may have been chosen by the applicant based on his or her judgment, and their detailed meanings are explained in the relevant sections of the description in this article. In addition, it is required to understand the present disclosure not only through the actual terminology used, but also through the meaning implied by each term.

The ultrasonic dual-channel welding system of the present disclosure includes two sets of generators and acoustic assemblies, which is applicable to, but not limited to, application scenarios of high-power welding.

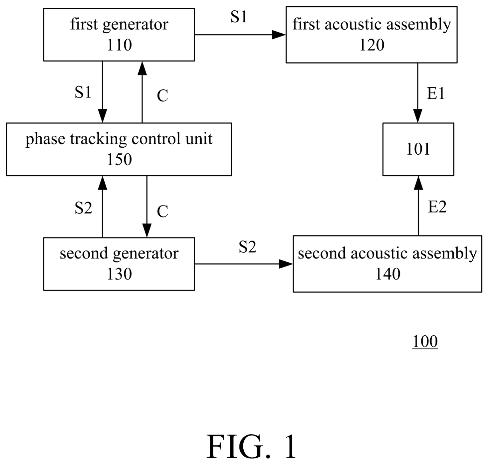

FIG. 1 is a system diagram of an ultrasonic dual-channel welding system according to an embodiment of the present disclosure. As shown in FIG. 1, the ultrasonic dual-channel welding system 100 includes the first generator 110, the first acoustic assembly 120, the second generator 130, the second acoustic assembly 140, and the phase tracking control unit 150. Among them, the first generator 110 is configured to generate the first ultrasonic signal S1, the first acoustic assembly 120 is configured to provide the first welding energy E1 to the part 101 to be welded according to the first ultrasonic signal S1, the second generator 130 is configured to generate the second ultrasonic signal S2, the second acoustic assembly 140 is configured to provide the second welding energy E2 to the part 101 to be welded according to the second ultrasonic signal S2, the phase tracking control unit 150 is configured to generate the phase control signal C in real time according to the first ultrasonic signal S1 and the second ultrasonic signal S2, send the phase control signal C to the first generator 110 and/or the second generator 130, and adjust the first ultrasonic signal S1 and/or the second ultrasonic signal S2, such that the first welding energy E1 and the second welding energy E2 are in an energy superposition state.

Specifically, both the first generator 110 and the second generator 130 are ultrasonic generators, which are used to generate the required ultrasonic waves. It can be understood that such ultrasonic waves have a certain frequency, phase, and amplitude, which can be set as needed.

The first acoustic assembly 120 and the second acoustic assembly 140 both refer to acoustic components used to convert ultrasonic waves into mechanical energy, also known as acoustic systems in ultrasonic welding machines, the acoustic systems have resonant frequencies. During the welding process, it is expected that all acoustic assemblies in the acoustic system are in a resonant state, and the output frequency of the generator is consistent with the resonant frequency of the acoustic system. The present disclosure does not limit the specific implementation methods of the first acoustic assembly 120 and the second acoustic assembly 140. In some embodiments, the first acoustic assembly 120 includes a first transducer, a first amplitude modulator, and a first welding head. In some embodiments, the second acoustic assembly 140 includes a second transducer, a second amplitude modulator, and a second welding head. The transducer is used to convert the energy of ultrasonic signals into mechanical motion of the same frequency, this mechanical motion is transmitted to the welding head through one set of amplitude modulators that can change the amplitude, the welding head transfers the received vibration energy to a joint part of the workpiece to be welded. In this area, the vibration energy is converted into thermal energy through friction, melting the material and achieving welding. Among them, the first transducer may be the same or different from the second transducer, the first amplitude modulator may be the same or different from the second amplitude modulator, and the first welding head may be the same or different from the second welding head. When welding the part 101 to be welded, the first welding head and the second welding head directly contact the part 101 to be welded, and apply the first welding energy E1 and the second welding energy E2 to the part 101 to be welded respectively, thereby achieving the welding operation of the part 101 to be welded.

As shown in FIG. 1, according to the principle of ultrasonic welding, the first generator 110 generates the first ultrasonic signal S1, and transmits the first ultrasonic signal S1 to the first acoustic assembly 120. The first acoustic assembly 120 converts the first ultrasonic signal S1 into the first welding energy E1 and outputs it to the part 101 to be welded; the second generator 130 generates the second ultrasonic signal S2, and transmits the second ultrasonic signal S2 to the second acoustic assembly 140. The second acoustic assembly 140 converts the second ultrasonic signal S2 into the second welding energy E2 and outputs it to the part 101 to be welded.

As shown in FIG. 1, the phase tracking control unit 150 is set between the first generator 110 and the second generator 130, the phase tracking control unit 150 can obtain the first ultrasonic signal S1 from the first generator 110 and the second ultrasonic signal S2 from the second generator 130, and generate the phase control signal C in real time according to the obtained first ultrasonic signal S1 and second ultrasonic signal S2. The present disclosure does not limit the number of phase control signal C, which can include one or more phase control signals C that are the same or different. For example, generating one phase control signal C, sending it to the first generator 110, and generating another phase control signal C, sending it to the second generator 130.

In some embodiments, only the first ultrasonic signal S1 needs to be adjusted, the phase control signal C is only sent to the first generator 110, enabling the first generator 110 to generate an updated first ultrasonic signal S1 according to the phase control signal C, so that the first welding energy E1 and the second welding energy E2 are in a state of energy superposition.

In some embodiments, only the second ultrasonic signal S2 needs to be adjusted, the phase control signal C is only sent to the second generator 130, enabling the second generator 130 to generate an updated second ultrasonic signal S2 according to the phase control signal C, so that the first welding energy E1 and the second welding energy E2 are in a state of energy superposition.

In some embodiments, both the first ultrasonic signal S1 and the second ultrasonic signal S2 need to be adjusted, the same or different phase control signals C are sent to the first generator 110 and the second generator 130 respectively. This enables the first generator 110 to generate an updated first ultrasonic signal S1 according to the phase control signal C, and the second generator 130 to generate an updated second ultrasonic signal S2 according to the phase control signal C, so that the first welding energy E1 and the second welding energy E2 are in a state of energy superposition.

It should be noted that the state where the first welding energy E1 and the second welding energy E2 are in energy superposition means that the wave peaks of the two energy waveforms applied to part 101 to be welded overlap, and the wave troughs also overlap. This allows the energies to superimpose on each other instead of canceling each other out, which is equivalent to increasing the welding power to meet the requirements of high-power welding.

According to the ultrasonic dual-channel welding system 100 of the present disclosure, the first ultrasonic signal S1 and the second ultrasonic signal S2 can be obtained in real time through the phase tracking control unit 150, and the phase control signal C can be generated to adjust the first ultrasonic signal S1 and/or the second ultrasonic signal S2, adaptively adjusting the phases of the first ultrasonic signal S1 and the second ultrasonic signal S2, so that the first welding energy E1 and the second welding energy E2 are in a state of energy superposition in real time, which can meet the requirements of high-power welding and overcome the problem that two sets of ultrasonic generators cannot effectively cooperate with each other in the existing technology.

The present disclosure does not limit how the phase control signal C is generated, any phase control signal C generated by the welding system that enables the first welding energy E1 and the second welding energy E2 to be in a state of energy superposition in real time falls within the protection scope of the present disclosure.

In some embodiments, the first acoustic assembly 120 has a first target phase, the second acoustic assembly 140 has a second target phase, a target phase difference exists between the first target phase and the second target phase, and the phase control signal C is configured to make a phase difference between the phase of the first ultrasonic signal S1 and the phase of the second ultrasonic signal S2 equal to the target phase difference.

In some embodiments, the desired target phase difference can be set according to actual needs. For example, in some embodiments, if the phase signals of the first generator 110 and the second generator 130 need to be kept synchronized, the target phase difference is the synchronous phase difference. In some embodiments, the range of synchronous phase difference is 0~±2°, which means that the phase difference between two signals is considered synchronous within ±2°. In some embodiments, if the phase signals of the first generator 110 and the second generator 130 need to be kept asynchronous, the target phase difference is the asynchronous phase difference. In some embodiments, the range of asynchronous phase difference is±2°~±180°.

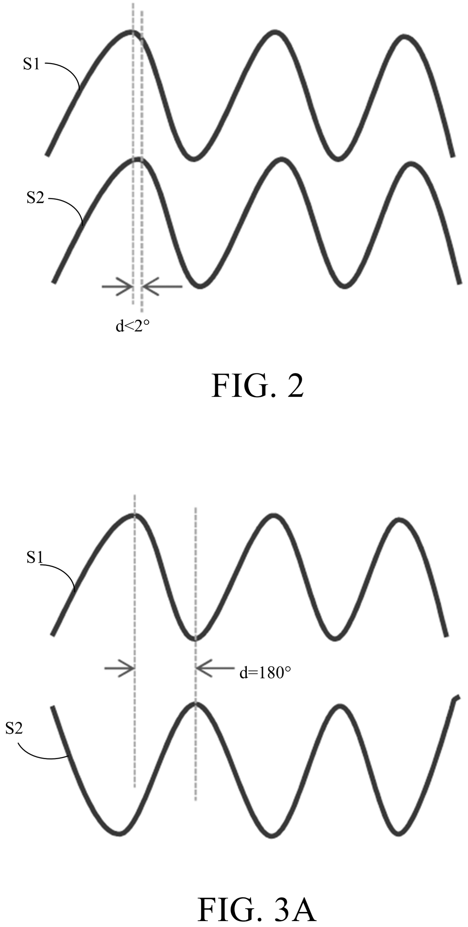

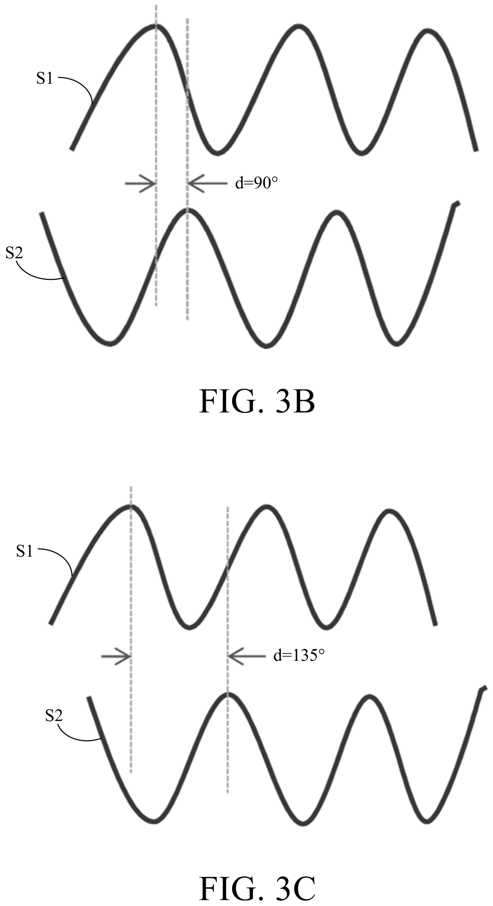

FIG. 2 is an exemplary waveform diagram of a first ultrasonic signal S1 and a second ultrasonic signal S2 in-phase. As shown in FIG. 2, the phase difference d between the first ultrasonic signal S1 and the second ultrasonic signal S2 is less than 2°, indicating that they are in-phase signals. FIGs. 3A to 3C show exemplary waveform diagrams of the first ultrasonic signal S1 and the second ultrasonic signal S2 with three out-of-phases, where in FIG. 3A, the phase difference d=180°, in FIG. 3B, the phase difference d=90°, and in FIG. 3C, the phase difference d=135°. In the three cases shown in FIGs. 3A to 3C, the first ultrasonic signal S1 and the second ultrasonic signal S2 are out-of-phase. The ultrasonic dual-channel welding system used in the present disclosure can control the phase difference between the first ultrasonic signal S1 and the second ultrasonic signal S2 as needed to meet the phase requirements of the dual-channel acoustic assembly. This ultrasonic dual-channel welding system can be used for various ultrasonic welding application settings.

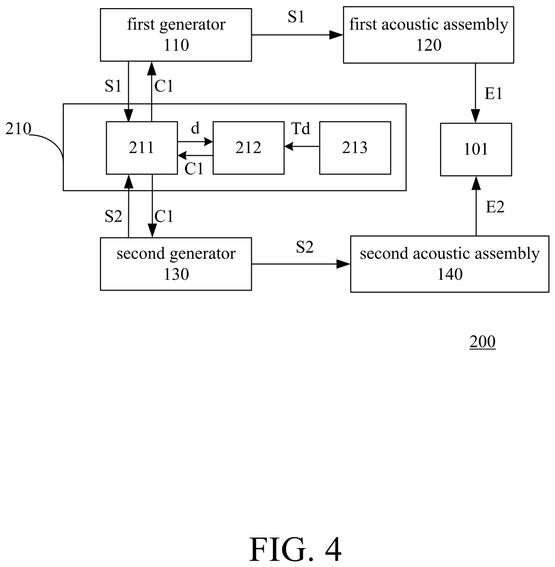

FIG. 4 is a system diagram of an ultrasonic dual-channel welding system according to another embodiment of the present disclosure. As shown in FIG. 4, the ultrasonic dual-channel welding system 200 includes the first generator 110, the first acoustic assembly 120, the second generator 130, the second acoustic assembly 140, and the part 101 to be welded in FIG. 1, and therefore uses the same reference numerals. In the ultrasonic dual-channel welding system 200, the phase control signal C includes the first phase control signal C1, the phase tracking control unit 210 includes the phase monitoring control unit 211, the phase tracking lock unit 212, and the system phase setting unit 213, wherein, the phase monitoring control unit 211 is configured to monitor the first ultrasonic signal S1 and the second ultrasonic signal S2 in real time, and calculate the phase difference d between the first ultrasonic signal S1 and the second ultrasonic signal S2 in real time; the system phase setting unit 213 is configured to set the target phase difference Td; the phase tracking lock unit 212 is configured to compare the phase difference d with the target phase difference Td, generate the first phase control signal C1, send the first phase control signal C1 to the phase monitoring control unit 211, and the phase monitoring control unit 211 is further configured to send the first phase control signal C1 to the first generator 110 and/or the second generator 130. According to the embodiment 200, the phase monitoring control unit 211 outputs the phase difference d calculated in real time to the phase tracking lock unit 212. The system phase setting unit 213 outputs the set target phase difference Td to the phase tracking lock unit 212. The phase tracking lock unit 212 simultaneously receives the real time phase difference d and the target phase difference Td, compares the two, generates the first phase control signal C1, and sends the first phase control signal C1 to the first generator 110 and/or the second generator 130.

In some embodiments, the first phase control signal C1 includes a high level and a low level. For example, using the high level indicates that the difference between the phase difference d and the target phase difference Td is within a first range, and using the low level indicates that the difference between the phase difference d and the target phase difference Td is within a second range. In some embodiments, the high level is represented by the number 1, high voltage, or high current, while the low level is represented by the number 0, low voltage, or low current.

According to the ultrasonic dual-channel welding system 200, users can set the target phase difference Td through the system phase setting unit 213, the target phase difference Td is set according to the setting requirements of the first acoustic assembly 120 and the second acoustic assembly 140. Therefore, by adjusting the phase difference d between the first ultrasonic signal S1 and the second ultrasonic signal S2, the phase difference d is made equal to the target phase difference Td, the phase of the ultrasonic signal can be made consistent with the signals set for the first acoustic assembly 120 and the second acoustic assembly 140, that is, the phase of the ultrasonic signal is locked.

In some embodiments, the first acoustic assembly 120 has the first target phase Tp1, the second acoustic assembly 140 has the second target phase Tp2, and the phase control signal C is configured to make the phase P1 of the first ultrasonic signal S1 consistent with the first target phase Tp1, and/or, make the phase P2 of the second ultrasonic signal S2 consistent with the second target phase Tp2.

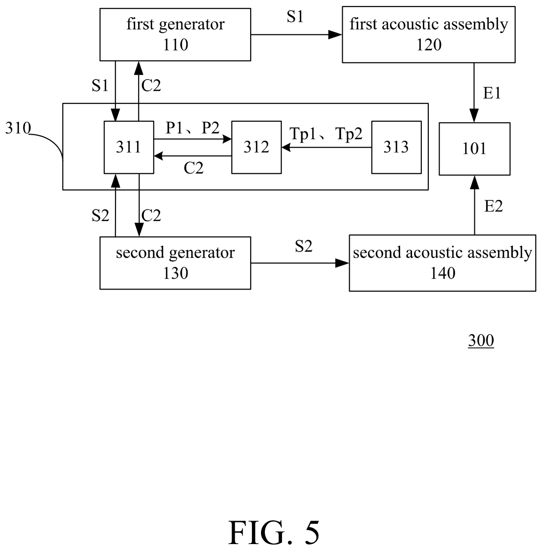

FIG. 5 is a system diagram of an ultrasonic dual-channel welding system according to another embodiment of the present disclosure. As shown in FIG. 5, the ultrasonic dual-channel welding system 300 includes the first generator 110, the first acoustic assembly 120, the second generator 130, the second acoustic assembly 140, and the part 101 to be welded in FIG. 1, and therefore uses the same reference numerals. In the ultrasonic dual-channel welding system 300, the phase control signal C includes the second phase control signal C2, the phase tracking control unit 310 includes the phase monitoring control unit 311, the phase tracking lock unit 312, and the system phase setting unit 313, wherein, the phase monitoring control unit 311 is configured to monitor the first ultrasonic signal S1 and the second ultrasonic signal S2 in real time; the system phase setting unit 313 is configured to set the first target phase Tp1 and the second target phase Tp2; the phase tracking lock unit 312 is configured to compare the phase P1 of the first ultrasonic signal S1 with the first target phase Tp1, compare the phase P2 of the second ultrasonic signal S2 with the second target phase Tp2, generate the second phase control signal C2, and send the second phase control signal C2 to the phase monitoring control unit 311, the phase monitoring control unit 311 is further configured to send the second phase control signal C2 to the first generator 110 and/or the second generator 130.

According to these embodiments, the second phase control signal C2 includes the first phase difference (Tp1-P1) between the phase P1 of the first ultrasonic signal S1 and the first target phase Tp1, and/or the second phase difference (Tp2-P2) between the phase P2 of the second ultrasonic signal S2 and the second target phase Tp2.

According to the ultrasonic dual-channel welding system 300, the user first sets the first target phase Tp1 and the second target phase Tp2 through the system phase setting unit 313. For example, the first target phase Tp1 is set according to the setting requirements of the first acoustic assembly 120, and the second target phase Tp2 is set according to the setting requirements of the second acoustic assembly 140, regardless of whether they are in-phase, out-of-phase, or have a phase difference of a certain number of degrees. According to this embodiment, the user can flexibly set the target phases to be achieved by the system, and adjust the phase P1 of the first ultrasonic signal S1 and the phase P2 of the second ultrasonic signal S2 through real time monitoring and feedback, so that the phase of the ultrasonic signal is consistent with the signal to be set for the acoustic assembly, and finally, the first welding energy E1 and the second welding energy E2 applied together to the part 101 to be welded by the first generator 110 and the second generator 130 are in energy superposition.

In some embodiments, the first generator 110 is the master generator, the second generator 130 is the slave generator. This ultrasonic dual-channel welding system is suitable for the master-slave generator system.

In some embodiments, the phase monitoring control unit, the phase tracking lock unit, and the system phase setting unit in the ultrasonic dual-channel welding system of the present disclosure can be implemented using analog circuits or digital circuits.

The ultrasonic dual-channel welding system of the present disclosure can set the target phase difference or target phase to be achieved according to the requirements of the acoustic tool assembly, meeting the requirements of various practical production processes, thereby quickly changing the phases of the ultrasonic signals from the master generator and the slave generator; it is possible to quickly match multiple acoustic tool assemblies without changing the configurations of the master generator and the slave generator.

The basic concepts have been described above. Obviously, for those skilled in the art, the above invention disclosure is only an example and does not constitute a limitation of the present disclosure. Although not explicitly stated here, those skilled in the art may make various modifications, improvements, and revisions to the present disclosure. Such modifications, improvements, and revisions are suggested in the present disclosure, therefore they still fall within the spirit and scope of the exemplary embodiments of the present disclosure.

Meanwhile, the present disclosure uses specific terms to describe its embodiments. For example, "one embodiment," "an embodiment," and/or "some embodiments" refer to a certain feature, structure, or characteristic related to at least one embodiment of the present disclosure. Therefore, it should be emphasized and noted that references to "an embodiment," "one embodiment," or "an alternative embodiment" at different positions in this specification two or more times do not necessarily refer to the same embodiment. In addition, certain features, structures, or characteristics in one or more embodiments of the present disclosure may be appropriately combined.

In some embodiments, numbers describing the quantity of components or attributes are used. It should be understood that such numbers used in describing the embodiments are modified by the terms "about," "approximately," or "substantially" in some examples. Unless otherwise specified, "about," "approximately," or "substantially" indicate that the stated number allows for a variation of ±20%. Correspondingly, in some embodiments, the numerical parameters used in the specification and claims are approximate values, and such approximate values may change according to the required characteristics of individual embodiments. In some embodiments, numerical parameters should take into account the specified significant digits and adopt the method of retaining general digits. Although the numerical ranges and parameters used in some embodiments of the present disclosure to confirm the breadth of their scope are approximate values, in specific embodiments, the setting of such numerical values is as precise as feasible within the applicable range.

## Claims

1. An ultrasonic dual-channel welding system, wherein comprising: a first generator, a first acoustic assembly, a second generator, a second acoustic assembly, and a phase tracking control unit, the first generator is configured to generate a first ultrasonic signal, the first acoustic assembly is configured to provide a first welding energy to a part to be welded according to the first ultrasonic signal, the second generator is configured to generate a second ultrasonic signal, the second acoustic assembly is configured to provide a second welding energy to the part to be welded according to the second ultrasonic signal, the phase tracking control unit is configured to generate a phase control signal in real time according to the first ultrasonic signal and the second ultrasonic signal, send the phase control signal to the first generator and/or the second generator, and adjust the first ultrasonic signal and/or the second ultrasonic signal, such that the first welding energy and the second welding energy are in an energy superposition state.

2. The ultrasonic dual-channel welding system according to claim 1, wherein the first acoustic assembly has a first target phase, the second acoustic assembly has a second target phase, a target phase difference exists between the first target phase and the second target phase, and the phase control signal is configured to make a phase difference between a phase of the first ultrasonic signal and a phase of the second ultrasonic signal equal to the target phase difference.

3. The ultrasonic dual-channel welding system according to claim 2, wherein the phase control signal comprising a first phase control signal, the phase tracking control unit comprising a phase monitoring control unit, a phase tracking lock unit, and a system phase setting unit, wherein,
the phase monitoring control unit is configured to monitor the first ultrasonic signal and the second ultrasonic signal in real time, and calculate the phase difference between the first ultrasonic signal and the second ultrasonic signal in real time;
the system phase setting unit is configured to set the target phase difference;
the phase tracking lock unit is configured to compare the phase difference with the target phase difference, generate the first phase control signal, send the first phase control signal to the phase monitoring control unit, and the phase monitoring control unit is further configured to send the first phase control signal to the first generator and/or the second generator.

4. The ultrasonic dual-channel welding system according to claim 3, wherein the target phase difference comprising a synchronous phase difference and an asynchronous phase difference.

5. The ultrasonic dual-channel welding system according to claim 3, wherein the first phase control signal comprising a high level and a low level.

6. The ultrasonic dual-channel welding system according to claim 1, wherein the first acoustic assembly has a first target phase, the second acoustic assembly has a second target phase, and the phase control signal is configured to make a phase of the first ultrasonic signal consistent with the first target phase, and/or, make a phase of the second ultrasonic signal consistent with the second target phase.

7. The ultrasonic dual-channel welding system according to claim 6, wherein the phase control signal comprising a second phase control signal, the phase tracking control unit comprising a phase monitoring control unit, a phase tracking lock unit, and a system phase setting unit, wherein,
the phase monitoring control unit is configured to monitor the first ultrasonic signal and the second ultrasonic signal in real time;
the system phase setting unit is configured to set the first target phase and the second target phase;
the phase tracking lock unit is configured to compare the phase of the first ultrasonic signal with the first target phase, compare the phase of the second ultrasonic signal with the second target phase, generate the second phase control signal, and send the second phase control signal to the phase monitoring control unit, the phase monitoring control unit is further configured to send the second phase control signal to the first generator and/or the second generator.

8. The ultrasonic dual-channel welding system according to claim 7, wherein the second phase control signal comprising a first phase difference between the phase of the first ultrasonic signal and the first target phase, and/or, a second phase difference between the phase of the second ultrasonic signal and the second target phase.

9. The ultrasonic dual-channel welding system according to claim 1, wherein the phase control signal is configured to control a phase range from 0° to ±180°.

10. The ultrasonic dual-channel welding system according to claim 1, wherein the first acoustic assembly comprising a first transducer, a first amplitude modulator, and a first welding head.

11. The ultrasonic dual-channel welding system according to claim 1, wherein the second acoustic assembly comprising a second transducer, a second amplitude modulator, and a second welding head.
The ultrasonic dual-channel welding system according to claim 1, wherein the first generator is a master generator, and the second generator is a slave generator.
